# EUROPÄISCHE PATENTANMELDUNG

(11) **EP 1 705 045 A2**
(43) Veröffentlichungstag der Anmeldung: **27.09.2006**
(21) Anmeldenummer: 06004885.7
(22) Anmeldetag: 10.03.2006
(51) Int. Cl.: B60J 7/22

(54) **Windschott und Rücksitzanordnung**

(30) Priorität: 26.03.2005 DE 102005013990
(71) Anmelder: Wilhelm Karmann GmbH, 49084 Osnabrück (DE)
(72) Erfinder: Baule, Rolf-Peter, 49152 Bad Essen (DE)

(57) **Zusammenfassung**

Es wird ein Windschott für ein Kraftfahrzeug mit wahlweise geöffneten oder geschlossenem Dach wie ein Cabriolet angegeben, das aus wenigstens einem Teil der Sitzfläche eines Rücksitzes besteht und somit herkömmliche Windschotts vollständig ersetzen kann.

## Beschreibung

Die vorliegende Erfindung bezieht sich auf ein Windschott und auf eine Rücksitzanordnung.

Bei Kraftfahrzeugen, bei denen das Dach wahlweise geöffnet oder geschlossen werden kann, wie zum Beispiel Cabriolets, ist der Einsatz verschiedenster Arten von Windschutzeinrichtungen, die zum Beispiel als Windschott ausgebildet sind, bekannt.

Ein Beispiel für ein Windschott für ein Cabriolet, das baulich ein Bestandteil einer Rücksitzanordnung ist, ist aus der DE 102 20 029 A1 bekannt. Ein weiteres Beispiel ist aus der DE 101 21 840 A1 bekannt.

Weiterhin ist aus der EP 1 193 095 A2 eine Windschutzeinrichtung bekannt, die in einem Vordersitz integriert ist und eine Art Luftschal (Airscarf) um den Kopfbereich der Person, die auf dem Fahrzeugsitz sitzt, bildet.

Aufgabe der vorliegenden Erfindung ist es, ein verbessertes Windschott, das baulich mit einer Rücksitzanordnung verbunden ist, und eine entsprechende Rücksitzanordnung, anzugeben.

Diese Aufgabe wird gelöst durch ein Windschott nach Anspruch 1 und eine Rücksitzanordnung nach Anspruch 7.

Weiterbildungen der Erfindung sind in den Unteransprüchen angegeben.

Mit der Idee der Erfindung, nämlich eine Rücksitzanordnung so auszubilden, dass ein Teil der Rücksitzanordnung, nämlich wenigstens ein Teil der Sitzfläche, das Windschott bildet, ist es möglich, ein separates Windschott, ob es Bestandteil der Rücksitzanordnung ist oder nicht, vollständig zu ersetzen.

Die Ausbildung der Lagerung als Drehlagerung im oberen Bereich der Lehne der Rücksitzanordnung ermöglicht weitere zusätzliche Wirkungen. Zum einen kann die Drehlagerung über ein durchgehendes Bauelement, wie zum Beispiel ein durchgehendes Rohr, implementiert werden. Das durchgehende Bauelement kann zur Versteifung des Fahrzeuges verwendet werden.

Die gesamte Rücksitzanordnung kann um die Drehlagerung nach oben geschwenkt werden, so dass dann neben der Windschottfunktion auch eine Sicherung des Stauraums unter den nach oben geschwenkten Rücksitzen gegen Diebstahl und Vandalismus ermöglicht wird und gleichzeitig ein Durchladen von Gegenständen vom Kofferraum in den Bereich der Rücksitze möglich ist.

Durch entsprechende Ausbildung ist es auch möglich, eine Sitzheizung und/oder Sitzbelüftung, die in der Rücksitzanordnung integriert ist, auch zur Bereitstellung eines sogenannten Luftschals für die Personen auf den Vordersitzen zu verwenden.

Weitere Merkmale und Zweckmäßigkeiten ergeben sich aus der Beschreibung von Ausführungsbeispielen anhand der Figuren. Von den Figuren zeigen:
- Fig. 1: eine schematische Seitenansicht einer Karosserie eines Cabriolets, in der eine erste Ausführungsform einer Rücksitzanordnung mit einem Windschott schematisch gezeigt ist;
- Fig. 2: eine schematische Seitenansicht einer Karosserie eines Cabriolets, in der eine zweite Ausführungsform einer Rücksitzanbrdnung mit einem Windschott schematisch gezeigt ist;
- Fig. 3: eine perspektivische schematische Ansicht einer Ausführungsform einer Rücksitzanordnung mit Windschott; und
- Fig. 4: in Ansicht a) eine Schnittansicht entlang der Linie X-X aus Fig. 3, und in Ansicht b) eine Schnittansicht entlang der Linie XI-XI aus Fig. 3.

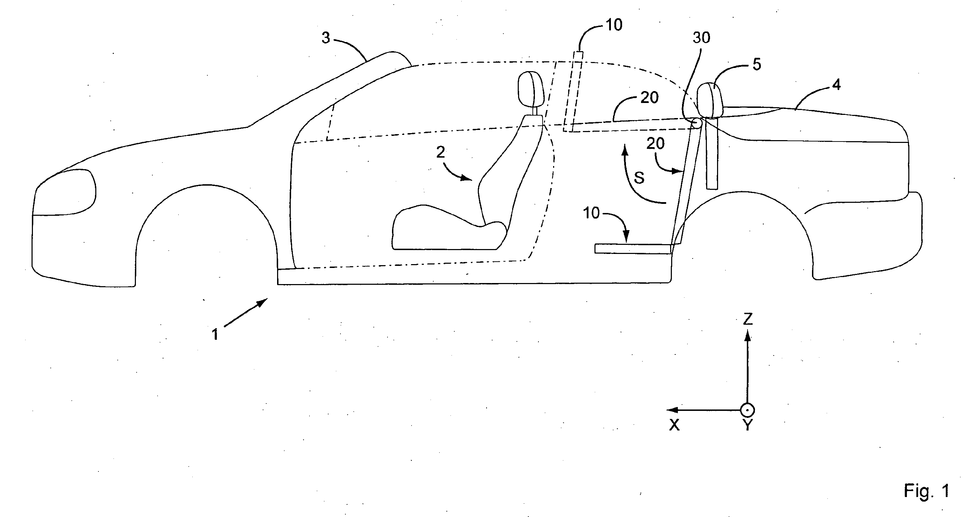

In Fig. 1 ist eine schematische Seitenansicht einer Karosserie 1 eines Cabriolets gezeigt. Das kartesische Koordinatensystem X-Y-Z in Fig. 1 ist so angeordnet, dass die X-Richtung mit der normalen Vorwärtsfahrtrichtung des entsprechenden Cabriolets übereinstimmt, die Y-Richtung mit der Querrichtung und die Z-Richtung mit der Höhenrichtung des Fahrzeuges übereinstimmt. In der gesamten Beschreibung gilt die Bezugnahme auf die X-, Y- und Z-Richtung entsprechend.

In der Seitenansicht der Karosserie 1 aus Fig. 1 sind die Karosserie- und Fensterlinien, die bei der seitlichen Ansicht den Innenraum verdecken würden, strichpunktiert dargestellt. Die übrigen Karosserieteile, wie die A-Säule 3 oder der Kofferraumdeckel 4 sind nicht strichpunktiert dargestellt. Wie in Fig. 1 gut zu erkennen ist, sind in dem Innenraum Vordersitze 2, von denen der linke Vordersitz dargestellt ist, und eine Rücksitzanordnung (nachfolgend Rücksitzanordnung) 10, 20, 30 angeordnet.

Die zu den Rücksitzen gehörenden Kopfstützen 5 sind im Überrollschutz integriert oder fest relativ zur Lehne gelagert, wobei die notwendigen Verstellmöglichkeiten gewährleistet sind. Die Kopfstützen sind kein Teil der Rücksitzanordnung 10, 20, 30.

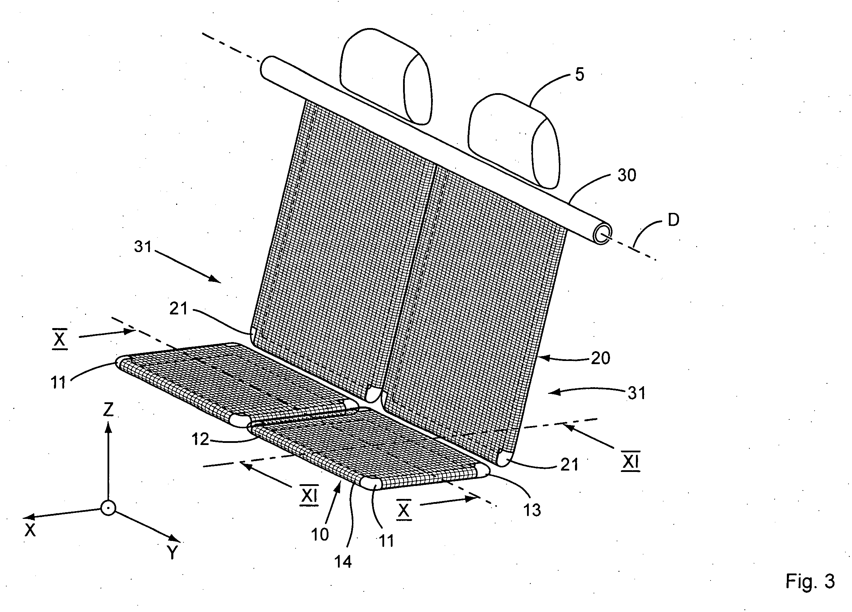

Die Rücksitzanordnung wird nun unter Bezugnahme auf die Fig. 1 und 3 beschrieben. Die Rücksitzanordnung weist eine Sitzflächenanordnung 10 und eine Rücklehnenanordnung 20 auf. Bei der in Fig. 3 gezeigten Ausführungsform weist die Sitzflächenanordnung 10 zwei getrennte Sitzflächenelemente 11, 11, also in Y-Richtung ein rechtes und ein linkes Sitzflächenelement 11, 11, auf. Analog weist die Rücklehnenanordnung 20 bei der in Fig. 3 gezeigten Ausführungsform zwei getrennte Rücklehnenelemente 21, 21 auf. Am in Z-Richtung oberen Ende der Rücklehnenanordnung ist eine Drehlagerung 30 mit einer Drehachse D vorgesehen. Je ein Sitzflächenelement 11 und ein Rücklehnenelement 21 bilden ein Sitzelement 31.

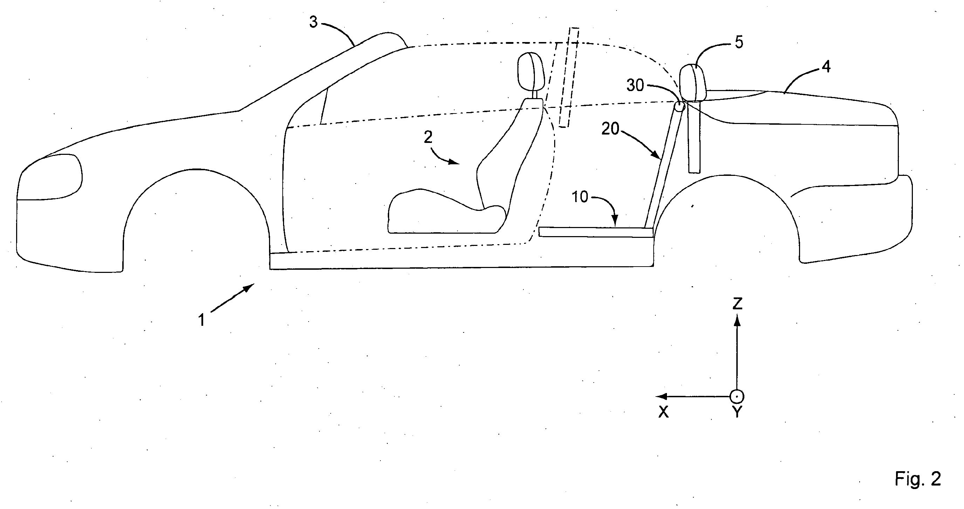

Bei der in Fig. 1 gezeigten ersten Ausführungsform sind wahlweise die Sitzelemente 31, 31 auf der linken Seite und/oder der rechten Seite der Rücksitzanordnung, d.h. das jeweilige Sitzflächenelement zusammen mit dem auf der gleichen Seite befindlichen Rücklehnenelement 21 um die Drehachse D nach oben verschwenkbar (siehe den Pfeil S in Fig. 1). Durch das Verschwenken werden die Rücklehnenelemente 21 im wesentlichen horizontal (im wesentlichen parallel zur X-Y-Ebene) angeordnet und die Sitzflächenelemente 11, 11 werden im wesentlichen senkrecht in der Z-Richtung angeordnet, so dass sie die Funktion eines Windschotts erfüllen können. Diese Stellung wird als Windschottstellung bezeichnet und ist in Fig. 1 und 2 gestrichelt dargestellt. Die nicht verschwenkte Stellung, die in Fig. 1 und 2 mit durchgezogenen Linien dargestellt ist, wird als Sitzstellung bezeichnet.

Alternativ ist es auch möglich, wie es in Fig. 2 gezeigt ist, dass nicht die ganzen Sitzelemente 31, sondern nur das linke Sitzflächenelement 11 und/oder das rechte Sitzflächenelement 11 ohne die entsprechenden Rücklehnenelemente 21, 21 nach oben verschwenkt werden. Dazu wäre dann das entsprechende Sitzflächenelement 11 über eine (nicht gezeigte) Strebenanordnung mit der Drehlagerung 30 verbunden.

Selbstverständlich ist es durch entsprechende Ausbildung des Schwenkmechanismus auch möglich, dass die Rücklehnenelemente 21, 21 wahlweise mit den Sitzflächenelementen 11, 11 verschwenkt werden oder nicht.

Die Drehlagerung erfolgt vorzugsweise durch ein in Y-Richtung durchgehendes Element, wie zum Beispiel ein Rohr. Dieses durchgehende Element kann an beiden Fahrzeugseiten (in Y-Richtung) an der Karosserie 1 befestigt werden, so dass die Steifigkeit bzw. die Festigkeit des Fahrzeuges verstärkt wird. Eine Drehlagerung der linken und rechten Sitzflächen- und Rücklehnenelemente 11, 21 kann auch bei einem durchgehenden Element sichergestellt werden. Alternativ ist es möglich, separate Drehlagerungen vorzusehen.

Die Fixierung und die Einstellbarkeit der Sitzflächenelemente 11 und der Rücklehnenelemente 21 relativ zueinander wird beispielsweise durch Rastbeschläge verwirklicht, wie sie typischerweise zur Einstellung der Neigung von Lehnen verwendet werden.

Die entsprechenden Verstellmöglichkeiten und Drehungen können entweder für den Handbetrieb vorgesehen sein, oder alternativ können automatische Verstellmöglichkeiten, zum Beispiel elektrisch und/oder hydraulisch, vorgesehen werden.

In einer weiteren Modifikation sind die Rücklehnenelemente 21 so ausgebildet, dass sie in der horizontalen Lage auf den Vordersitzen oder auf entsprechenden Ablagepunkten, die an der Karosserie vorgesehen sind, abgelegt werden können.

Die Sitzflächenelemente 11 ragen in der Windschottstellung, wie in Fig. 1 gezeigt ist, bevorzugter Weise in Z-Richtung so weit nach oben, dass diese Stellung auch bei geschlossenem Dach bzw. Verdeck möglich ist. Dadurch kann bei geschlossenem Verdeck ein Durchladen vom Kofferraum in den hinteren Bereich des Innenraums gewährleistet werden.

Die Sicherheitsgurte können, wie es bekannt ist, so angeordnet werden, dass die Retraktoren im Rahmen der Rücklehnenelemente 21 befestigt werden oder in der Drehlagerung 30 untergebracht werden. Die Gurtschlösser können entweder an Rahmenelementen der Rücksitzanordnung 10, 20 oder an Rahmenelementen der Karosserie 1 befestigt werden. Dieses ist insbesondere dann möglich, wenn der obere Befestigungspunkt von Dreipunktgurten in der Fahrzeugmitte liegt.

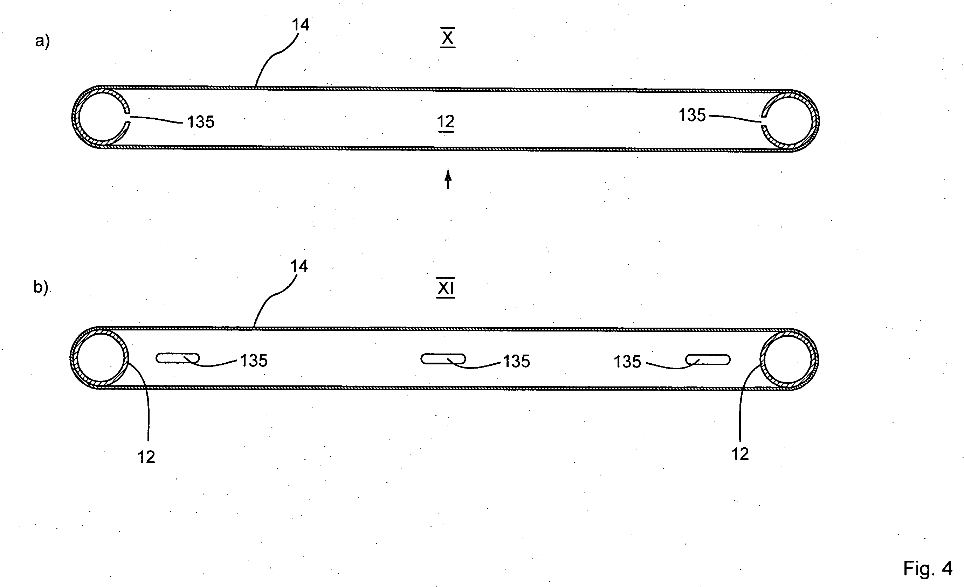

Die Sitzflächen- und/oder Rücklehnenelemente sind vorzugsweise so ausgebildet, wie es unter Bezugnahme auf die Fig. 3 und 4 beschrieben wird. Die Sitzflächenelemente 11 weisen einen Rahmen auf, der aus Querelementen 12 und Längselementen 13 besteht. Diese Rahmenteile sind bevorzugter Weise mit geschlossenen Hohlräumen versehen, die zum Beispiel durch Hydroformen gebildet wurden.

Besonderer Wert wird darauf gelegt, dass die Elemente leicht und trotzdem hochfest sind. Das ist zum Beispiel durch eine Ausbildung aus Aluminium und entsprechende Profilierung möglich.

Die Sitzflächen und/oder Rücklehnenflächen werden durch stark belastbare Gewebemembranen aus Materialien, wie sie zum Beispiel auch bei Bürostühlen Verwendung finden, ausgebildet. Diese Ausbildung ermöglicht einen guten Sitzkomfort bei gleichzeitiger guter Luftdurchlässigkeit, die sowohl für eine entsprechende Sitzbelüftung und Beheizung als auch für die Windschottfunktion sehr vorteilhaft ist.

Für einen Schutz der Passagiere auf der Rücksitzanordnung vor in dem Kofferraum befindlicher Ladung bei einem Unfall oder ähnlichem sind verschiedene Lösungen denkbar. Zum einen kann ein separater Schutz hinter den Rücklehnenelementen 21 vorgesehen sein, der bei Windschottstellung der Rücklehnenelemente 21 wahlweise auch nach vorne geklappt werden kann. Bevorzugt sind aber die Rücklehnenelemente 21 so ausgebildet, dass sie durch die entsprechende Festigkeit und Dicke den Schutz vor der im Kofferraum befindlichen Ladung selbst gewährleisten.

Nach einer weiteren Modifikation ist es möglich, Sitzflächen- und/oder Sitzlehnenheizungen und Belüftungen in besonders vorteilhafter Weise so vorzusehen, dass die notwendigen Elemente in den Rahmenteilen der Sitzflächen- und/oder Rücklehnenelemente 11, 21 untergebracht sind. Die entsprechende warme und/oder kalte Luft kann dann zum Beispiel durch Schlitze 13S, die zum Beispiel in den Längsrahmenteilen 13 vorgesehen sind, austreten. Da die Sitzflächen bzw. Rücklehnenflächen durch Membranen ausgebildet sind, ist eine effektive Belüftung bzw. Heizung möglich.

Nach einer besonders bevorzugten Modifikation können diese Belüftungs- und Heizungsmittel zur Ausbildung eines Luftschals verwendet werden, wenn sich die Sitzflächenelemente 11 und gegebenenfalls die Rücklehnenflächenelemente 21 in der Windschottstellung (siehe Fig. 1 und 2) befinden. Durch entsprechende Anordnung von Öffnungen in den Rahmenelementen kann die Warmluft gezielt in den Bereich um den Kopf des Fahrers oder Beifahrers zur Ausbildung des sogenannten Luftschals geführt werden.

Natürlich sind auch andere Ausführungen, bei denen die Sitzflächen- und/oder Rücklehnenflächen nicht nur durch Membranmaterialien ausgebildet sind, möglich. Zum Beispiel könnten die Sitzflächenelemente 11 auf der Oberseite eine abnehmbare Polsterung aufweisen, die in der Sitzstellung der Rücksitzanordnung auf den entsprechenden Membranelementen angeordnet ist. In der Windschottstellung ist diese Polsterung abgenommen und zum Beispiel in dem zusätzlichen Laderaum, der durch das Verschwenken entsteht, verstaut werden. Analog ist natürlich eine abnehmbare Polsterung der Lehnen möglich.

In einer weiteren Modifikation, die nicht gezeigt ist, ist die Drehlagerung 30 so ausgebildet, dass die Rücklehnenelemente 21 über die im wesentlichen waagerechte horizontale Stellung, die in Fig. 1 gezeigt ist, hinaus nach oben verschwenkt werden können und die Sitzflächenelemente 11 sind zum Verschwenken gegenüber der in Fig. 1 gezeigten Stellung um 180° relativ zu den Rücklehnenelementen 21 nach unten ausgebildet.

Wird die entsprechend positionierte Anordnung aus den Sitzflächenelementen 11 und den Rücklehnenelementen 21 so zurückgeschwenkt, dass die Rücklehnenelemente 21 in der im wesentlichen waagerechten Stellung befindlich sind, die in Fig. 1 gezeigt ist, kann ein weiter verbesserter Schutz gegen Diebstahl und Vandalismus für Gegenstände, die sich in dem Durchladeraum und Gepäckraum befinden, bewerkstelligt werden, da auch ein Durchgreifen zwischen den Vordersitzen verhindert wird.

In jedem Fall kann auch bei der in Fig. 1 gezeigten Windschottstellung ein Schutz gegen Vandalismus und Diebstahl von Gegenständen, die sich im Stauraum hinter den Vordersitzen und im Kofferraum befinden, gewährleistet werden. Ein Schutz gegen das Durchgreifen zwischen den Vordersitzen kann auch anders bewerkstelligt werden. Weiterhin kann die Möglichkeit vorgesehen werden, die entsprechenden Elemente in der in Fig. 1 gezeigten Stellung zu arretieren und zu verschließen.

Die Lagerung der Rücklehnenanordnung in deren oberem Bereich kann nicht nur als Drehlagerung 30, sondern alternativ auch als Mehrgelenkkette wie eine Hebel-Schwenk-Anordnung oder als Rastbeschlagsanordnung ausgebildet sein.

### BEZUGSZEICHEN

- 1: Karosserie
- 2: Vordersitze
- 3: A-Säule
- 4: Kofferraumdeckel
- 5: Kopfstützen
- 10: Sitzflächenanordnung
- 11: Sitzflächenelemente
- 12: Rahmen
- 13: Rahmen
- 14: Membran
- 20: Rücklehnenanordnung
- 21: Rücklehnenelemente
- 30: Drehlagerung
- 31: Sitzelement

## Patentansprüche

1. Windschott für ein Kraftfahrzeug mit wahlweise geöffneten oder geschlossenem Dach wie einem Cabriolet, das eine Rücksitzanordnung (10, 20, 30) aufweist, bei dem das Windschott von wenigstens einem Teil einer Sitzflächenanordnung (10, 11) der Rücksitzanordnung gebildet wird, und dieser das Windschott bildende Teil der Sitzflächenanordnung über eine Lagerung (30), die im oberen Bereich der Rücklehnenanordnung (20, 21) der Rücksitzanordnung angeordnet ist, von einer Sitzstellung in eine Windschottstellung und zurück bewegbar ist.

2. Windschott nach Anspruch 1, bei dem der das Windschott bildende Teil der Sitzflächenanordnung, der in die Windschottstellung bewegbar ist, eine luftdurchlässige Membran (14) aufweist.

3. Windschott nach Anspruch 1 oder 2, bei dem der das Windschott bildende Teil der Sitzflächenanordnung, der in die Windschottstellung bewegbar ist, aus einem Rahmen (12, 13) mit einer auf dem Rahmen angeordneten Membran (14) besteht.

4. Windschott nach Anspruch 3, bei dem Lüftungs- und/oder Heizungselemente in dem Rahmen (12, 13) vorgesehen sind.

5. Windschott nach Anspruch 4, bei dem der Rahmen (12, 13) so ausgebildet ist, dass in der Windschottstellung erwärmte Luft in Richtung eines Vordersitzes (2) geführt werden kann.

6. Windschott nach einem der Ansprüche 1 bis 5, bei dem die Lagerung als Drehlagerung (30) ausgebildet ist.

7. Rücksitzanordnung für ein Kraftfahrzeug mit wahlweise geöffneten oder geschlossenem Dach wie einem Cabriolet, die eine Sitzflächenanordnung (10) und eine Rücklehnenanordnung (20) und eine Lagerung (30), die im oberen Bereich der Rücklehnenanordnung (20) befindlich ist, aufweist, bei der wenigstens ein Teil (11) der Sitzflächenanordnung (10) über die Lagerung (30) von einer Sitzstellung in eine Windschottstellung und zurück bewegbar ist.

8. Rücksitzanordnung nach Anspruch 7, bei der die Lagerung eine Drehlagerung (30) ist, und der wenigstens eine Teil (11) der Sitzflächenanordnung (10) um eine Drehachse (D) der Drehlagerung (30) von einer Sitzstellung in eine Windschottstellung und zurück bewegbar ist.

9. Rücksitzanordnung nach Anspruch 7 oder 8, bei der der wenigstens eine Teil (11) der Sitzflächenanordnung (10) ein Windschott nach einem der Ansprüche 1 bis 5 bildet.

10. Rücksitzanordnung nach einem der Ansprüche 7 bis 9, bei dem die Lagerung ein Bauelement (30) aufweist, dass in Querrichtung (X) des Fahrzeuges auf beiden Seiten mit der Karosserie (1) verbunden ist.

11. Rücksitzanordnung nach einem der Ansprüche 7 bis 10, bei dem die Sitzflächenanordnung (10) zwei Sitzflächenelemente (11) aufweist und die Rücklehnenanordnung (20) zwei Rücklehnenelemente (21) aufweist, je ein Sitzflächenelement (11) und ein Rücklehnenelement (21) ein Sitzelement (31) bilden, und die Lagerung (30) so ausgebildet ist, dass die Sitzelemente (31) wahlweise einzeln oder zusammen von der Sitzstellung in die Windschottstellung und zurück bewegbar sind.
